# EUROPEAN PATENT APPLICATION

(11) **EP 2 854 077 A1**
(43) Date of publication of application: **01.04.2015**
(21) Application number: 14755963.7
(22) Date of filing: 12.03.2014
(51) Int. Cl.: G06K 17/00

(54) **AUTHENTICATION METHOD FOR WEARABLE DEVICE, AND WEARABLE DEVICE**

(30) Priority: 01.08.2013 CN 201310331978
(71) Applicant: Huawei Technologies Co., Ltd., Longgang District Shenzhen, Guangdong 518129 (CN)
(72) Inventor: QIAN, Li, Shenzhen Guangdong 518129 (CN)
(74) Representative: Goddar, Heinz J.
(86) International application number: PCT/CN2014/073297
(87) International publication number: WO 2015/014128

(57) **Abstract**

The present invention relates to the information security field and discloses an authentication method of a wearable device, and a wearable device. The authentication method includes: determining whether a user is a preset user of a wearable device; if the user is the preset user, acquiring verification information of an electronic device, where the verification information is used for authenticating the user by the electronic device; and sending the verification information to the electronic device. Because the unique identifier information of the user does not need to be sent to the electronic device when the user undergoes identity authentication by the electronic device, information leakage is prevented, and a technical effect of a higher security is achieved.

## Description

This application claims priority to Chinese Patent Application No. 201310331978.1, filed with the Chinese Patent Office on August 01, 2013 and entitled "AUTHENTICATION METHOD OF WEARABLE DEVICE AND WEARABLE DEVICE", which is incorporated herein by reference in its entirety.

### TECHNICAL FIELD

The present invention relates to the information security field, and in particular, to an authentication method of a wearable device and a wearable device.

### BACKGROUND

Under different environments, to implement security authentications of different needs, a user needs to hold different physical authentication entities, such as a smart card, a key, and an access control card, to interact with an environmental device. Furthermore, there are various authentication manners, such as an authentication manner based on a user password and an authentication manner based on a digital signature. Because authentication manners for different application environments are different, great inconvenience is brought to the user; meanwhile, for authentication manners based on various authentication entities, a user may suffer comparatively great loss once an authentication entity is lost or stolen.

In recent years, wearable devices have become a study focus in the industry. Various wearable devices appear, such as eyeglasses, watches, bracelets, clothes, rings and shoes. Being close to a human body, these wearable devices are capable of better sensing a user state, need and current environmental feature. Replacing the wearable devices or combining smart handhold terminals becomes a study trend of smart terminals in the future.

As a wearable device is close to a human body, a sensor arranged on the wearable device can be used to fully acquire a biological feature of a user, and the biological feature can be used to perform verification on the user. The wearable device uses a same authentication manner to perform verification on the user under different environments and requires no authentication entity for verification; and therefore, the wearable device, for one thing, is more convenient, and for another thing, effectively prevents damages incurred by the loss or theft of an authentication entity.

In the prior art, identity authentication on a user is performed based on a biological feature of the user, that is, verification information used in different occasions is a unique identity identifier of the user, resulting in that privacy of the user may not be guaranteed, easily causing user information leakage; and therefore, there is a technical problem in the prior art that security is comparatively low when identity authentication is performed on a user by a wearable device.

### SUMMARY

Embodiments of the present invention provide an authentication method of a wearable device and a wearable device to improve security when a wearable device performs identity authentication on a user.

According to a first aspect of the present invention, an authentication method of a wearable device is provided, including: determining whether a user is a preset user of a wearable device; if the user is the preset user, acquiring verification information of a corresponding target electronic device, where the verification information is used for authenticating the user by the electronic device; and sending the verification information to the electronic device.

With reference to the first aspect, in a first possible implementation manner, the determining whether a user is a preset user of a wearable device includes: acquiring a biological feature of the user; determining whether the biological feature is a preset feature, where, when the biological feature is the preset feature, it indicates that the user is the preset user.

With reference to the first aspect, in a second possible implementation manner, the determining whether a use is a preset user includes: determining whether the user is the preset user at every preset time interval; or after determining that verification needs to be performed on the user by the electronic device, determining whether the user is the preset user.

With reference to any possible implementation manner of the first aspect or the first or the second possible implementation manner of the first aspect, in a third possible implementation manner, the method further includes: pre-storing the verification information in the wearable device during initialization, where the verification information is determined according to a right of the user; or acquiring the verification information from a network server, and storing the verification information in the wearable device, where the verification information is determined according to a right of the user.

With reference to the first aspect or any possible implementation manner of the first to the third possible implementation manners of the first aspect, in a fourth possible implementation manner, the acquiring verification information of a corresponding target electronic device includes: establishing a communication connection with a network server, and obtaining the verification information from the network server; and the sending the verification information to the electronic device includes: forwarding the verification information obtained from the network server to the electronic device.

With reference to the first aspect, in a fifth possible implementation manner, the acquiring verification information of a corresponding target electronic device includes: acquiring identifier information of the electronic device; and determining, according to a matching relationship between identifier information and to-be-selected verification information, the verification information corresponding to the identifier information of the electronic device.

With reference to the first aspect, in a sixth possible implementation manner, the method further includes: determining whether the wearable device includes expired verification information that has expired; and when the expired verification information is included, deleting at least one piece of the expired verification information that has expired.

With reference to the first aspect or any possible implementation manner of the first to the sixth possible implementation manners of the first aspect, in a seventh possible implementation manner, the method further includes: if the user is not the preset user, generating alarm information, where the alarm information includes at least information including a feature of the user or including a current location of the user.

With reference to the first aspect or any possible implementation manner of the first to the seventh possible implementation manners of the first aspect, in an eighth possible implementation manner, the method further includes: if the user is not the preset user, refusing to send the verification information to the electronic device.

According to a second aspect of the present invention, a wearable device is provided, including: a first judging module, configured to determine whether a user is a preset user of the wearable device; an acquiring module, configured to acquire verification information of a corresponding target electronic device if the user is the preset user, where the verification information is used for authenticating the user by the electronic device; and a sending module, configured to send the verification information to the electronic device.

With reference to the second aspect, in a first possible implementation manner, the first judging module specifically includes: a detecting unit, configured to acquire a biological feature of the user; and a judging unit, configured to determine whether the biological feature is a preset feature, where, when the biological feature is the preset features, it indicates that the user is the preset user.

With reference to the second aspect, in a second possible implementation manner, the first judging module is specifically configured to: determine whether the user is the preset user at every preset time interval; or after determining that verification needs to be performed on the user by the electronic device, determine whether the user is the preset user.

With reference to the second aspect or any possible implementation manner of the first to the second possible implementation manners of the second aspect, in a third possible implementation manner, the device further includes: a storing module, configured to store the verification information, where the verification information is determined according to a right of the user; or to acquire the verification information from a network server and store the verification information in the wearable device, where the verification information is determined according to a right of the user.

With reference to the second aspect or any possible implementation manner of the first to the third possible implementation manners of the second aspect, in a fourth possible implementation manner, the acquiring module is specifically configured to: establish a communication connection with a network server, and obtain the verification information from the network server; and the sending module is specifically configured to forward the verification information obtained from the network server to the electronic device.

With reference to the second aspect, in a fifth possible implementation manner, the acquiring module further includes: an acquiring unit, configured to acquire identifier information of the electronic device; and a determining unit, configured to determine, according to a matching relationship between identifier information and verification information, the verification information corresponding to the identifier information of the electronic device.

With reference to the second aspect, in a sixth possible implementation manner, the device further includes: a second judging module, configured to determine whether the wearable device includes expired verification information that has expired; and a deleting module, configured to delete at least one piece of the expired verification information when the expired verification information is included.

With reference to the second aspect or any possible implementation manner of the first to the sixth possible implementation manners of the second aspect, in a seventh possible implementation manner, the apparatus further includes: an alarming module, configured to generate alarm information after the first judging module determines that the user is not the preset user, where the alarm information includes at least information including a feature of the user or information including a current location of the user.

With reference to the second aspect or any possible implementation manner of the first to the seventh possible implementation manners of the second aspect, in an eighth possible implementation manner, where the first judging module determines that the user is not the preset user of the wearable device, the sending module refuses to send the verification information to the electronic device.

According to a third aspect of the present invention, a wearable device is provided, including: a processor, configured to determine whether a user is a preset user of the wearable device; and when the user is the preset user, acquire verification information of a corresponding target electronic device, where the verification information is used for authenticating the user by the electronic device; and a data transmission interface, connected to the processor and configured to send the verification information to the electronic device.

With reference to the third aspect, in a first possible implementation manner, the device further includes: a storage, configured to store the preset feature; a biological feature collecting module, configured to collect a biological feature of the user; and the processor is also configured to determine whether the biological feature is the preset feature, where, when the biological feature is the preset feature, it indicates that the user is the preset user.

With reference to the third aspect, in a second possible implementation manner, the wearable device further includes: a timer, configured to generate a trigger signal at every preset time interval; the processor, specifically configured to receive the trigger signal and determine, based on the trigger signal, whether the user is the preset user; or the processor, specifically configured to determine whether the user is the preset user after determining that verification needs to be performed on the user by the electronic device.

With reference to the third aspect or any possible implementation manner of the first or the second possible implementation manners of the third aspect, in a third possible implementation manner, the data transmission interface is also configured to pre-store the verification information in the wearable device during initialization, where the verification information is determined according to a right of the user; or acquire the verification information from a network server, and store the verification information in the storage, where the verification information is determined according to a right of the user.

With reference to the third aspect or any possible implementation manner of the first to the third possible implementation manners of the third aspect, in a fourth possible implementation manner, the data transmission interface is specifically configured to establish a communication connection with a network server, and obtain the verification information from the network server; and forward the verification information obtained from the network server to the electronic device.

With reference to the third aspect, in a fifth possible implementation manner, the processor is specifically configured to acquire identifier information of the electronic device; and determine, according to a matching relationship between identifier information and verification information, the verification information corresponding to the identifier information of the electronic device.

With reference to the third aspect, in a sixth possible implementation manner, the processor is further configured to determine whether the wearable device includes expired verification information that has expired; and delete at least one piece of the expired verification information when the expired verification information is included.

With reference to the third aspect or any possible implementation manner of the first to the sixth possible implementation manners of the third aspect, in a seventh possible implementation manner, the processor is also configured to generate alarm information if the user is not the preset user, where the alarm information includes at least information including a feature of the user or information including a current location of the user.

Beneficial effects of the present invention are as follows:

In the embodiments of the present invention, when authentication is performed on a user by a wearable device, firstly, whether a user wearing the wearable device is a preset user is determined; when the user is the preset user, it is determined that the user has a right to undergo identity authentication by the wearable device; after that, verification information is determined by the wearable device and the verification information is sent to an electronic device, so that the electronic device performs identity authentication on the user by using the verification information; because identity authentication on the user is performed only on the wearable device, and the verification information sent to the electronic device is verification information corresponding to the electronic device, that is, when identity authentication is performed on the user, the unique identifier information of the user does not need to be sent to the electronic device; therefore, privacy of the user is guaranteed effectively, information leakage is prevented, and a technical effect of a higher security is achieved.

### BRIEF DESCRIPTION OF DRAWINGS

FIG. 1 is a flowchart of an authentication method of a wearable device according to an embodiment of the present invention;
FIG. 2 is a flowchart of determining whether a user is a preset user in an authentication method of a wearable device according to an embodiment of the present invention;
FIG. 3 is a flowchart of determining verification information in an authentication method of a wearable device according to an embodiment of the present invention;
FIG. 4 is a flowchart of deleting at least one piece of expired verification information in an authentication method of a wearable device according to an embodiment of the present invention;
FIG. 5 is a system block diagram of an authentication method of a wearable device according to Embodiment 1 of the present invention;
FIG. 6 is a system flowchart of an authentication method of a wearable device applied to an application scenario of hotel check-in according to Embodiment 2 of the present invention;
FIG. 7 is a system flowchart of an authentication method of a wearable device applied to a car rental service according to Embodiment 3 of the present invention;
FIG. 8 is a system flowchart of an authentication method of a wearable device applied to a car rental service according to Embodiment 4 of the present invention where verification information is acquired when authentication is performed on a user by a rented car;
FIG. 9 is a system flowchart of an authentication method of a wearable device applied to a scenario with a comparatively high requirement on security identification of the individual identity of a user according to Embodiment 5 of the present invention;
FIG. 10 is a structural diagram of an authentication apparatus of a wearable device according to an embodiment of the present invention; and
FIG. 11 is a structural diagram of a wearable device according to an embodiment of the present invention.

### DESCRIPTION OF EMBODIMENTS

Embodiments of the present invention provide an authentication method of a wearable device and a wearable device. Firstly, verification on whether a user of a wearable device is a preset user is performed; when the user is the preset user, it is determined that the user has a right to undergo identity authentication by the wearable device, and further, verification information of a corresponding target electronic device is acquired, where the verification information is used for authenticating the user by the electronic device, and after that, the verification information is sent to the electronic device.

In the foregoing solution, identity authentication on the user is performed directly on the wearable device without a need of sending unique identifier information of the user to the electronic device; therefore, privacy of the user is guaranteed effectively, leakage of user information is prevented, and a technical effect of a higher security is achieved.

Further, the verification information needs to be sent to the electronic device only when the wearable device authenticates that the user is the preset user, and then identity authentication is performed on the user, that is, if the user is not the preset user, identity authentication does not need to be performed on the user by the electronic device, thereby achieving a technical effect of reducing the processing burden of the electronic device.

Further, verification information for different electronic devices is different, that is, verification information of different security levels can be set based on different application scenarios; therefore, the identity authentication manner for a user is more flexible.

The following clearly and completely describes the technical solutions in the embodiments of the present invention with reference to the accompanying drawings in the embodiments of the present invention. Apparently, the described embodiments are a part rather than all of the embodiments of the present invention.

In a first aspect, embodiments of the present invention provide an authentication method of a wearable device. Examples of the wearable device are a pair of glasses, a watch, a bracelet, an article of clothing, a ring, and a pair of shoes, and so on.

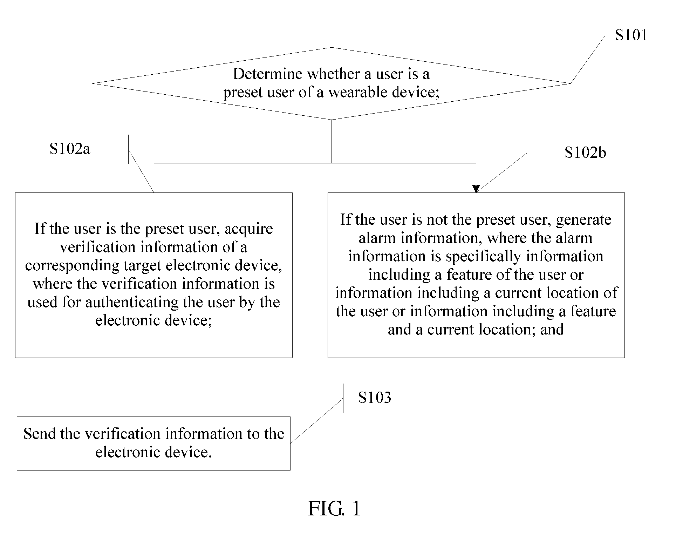

Referring to FIG. 1, the authentication method of a wearable device specifically includes the following steps performed by the wearable device:

Step S101: Determine whether a user is a preset user of the wearable device;

Step S102a: If the user is the preset user, acquire verification information of a corresponding target electronic device, where the verification information is used for authenticating the user by the electronic device; and the electronic device herein is possibly another specific device, such as an electronic access control and an electronic car lock, prepared for use by the user.

Step S103: Send the verification information to the electronic device.

Further, a further embodiment as an improvement may also include:

Step S102b: If the user is not the preset user, generate alarm information, where the alarm information is specifically: information including a feature of the user, information including a current location of the user, or information including the feature and the current location.

Further, in Step S101, a plurality of manners may be adopted to determine whether the user is the preset user. The following illustrates two of the determining manners, and certainly, a specific implementation process is not limited to the following two manners.

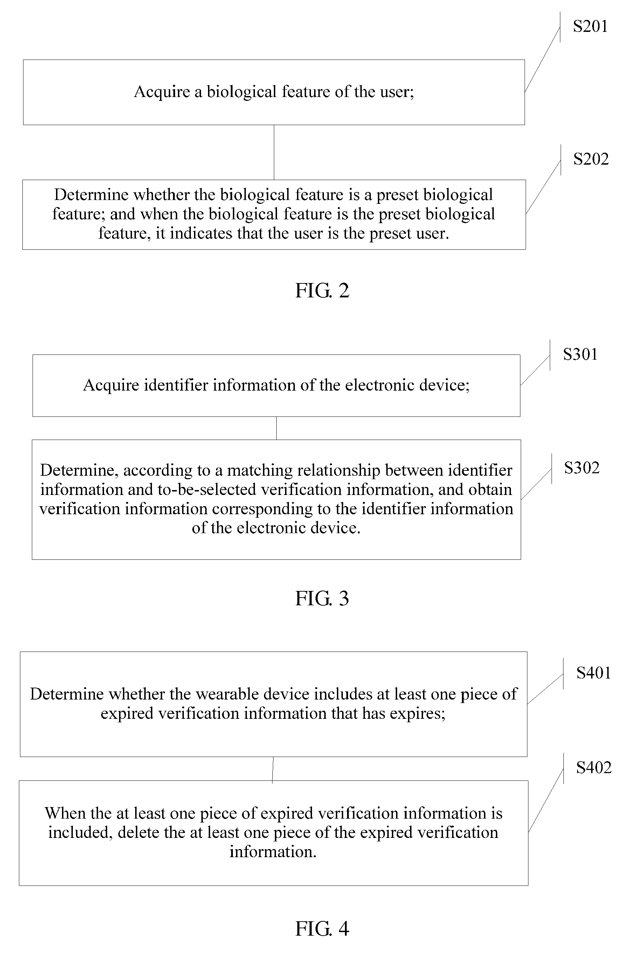

For a first manner, referring to FIG. 2, the Step S101 of determining whether the user is a preset user specifically includes the following steps:

Step S201: Acquire a biological feature of the user;

Step S202: Determine whether the biological feature is a preset feature, where, when the biological feature is the preset feature, it indicates that the user is the preset user.

In Step S201, the biological feature may be a plurality of biological features, such as an iris feature, a pulse feature, a heartbeat feature, an action feature, a fingerprint feature, a voice feature, a temperature feature and a combination of these features.

In Step S202, determine whether the biological feature is the preset feature, for example, match the biological feature with the preset feature to determine whether a difference between the two is within a threshold range; if the difference is within the threshold range, it indicates that the biological feature is the preset feature, and further indicates that the user is the preset user; or else, it indicates that the biological feature is not the preset feature, and the user is not the preset user.

In the foregoing solution, whether the user is the preset user is determined directly by determining whether the biological feature of the user is the preset feature. Because the biological feature is an inherent biological feature of the user, different users do not share a same biological feature; therefore, a technical effect of guaranteeing accuracy in the identity authentication on the user is achieved. Further, the biological feature may be captured directly by the wearable device without a need of responding to other operations of the user; therefore, a technical effect that it is more convenient to perform the identity authentication for the user is achieved.

For a second manner, determine whether a user is a preset user, for example, when receiving an operation of the user, determine whether the operation meets a preset condition; and when the operation meets the preset condition, determine that the user is the preset user.

In a specific implementation process, the operation may be a gesture operation, a keystroke operation, a voice input operation and the like of the user; to be specific, that is, the user may set a preset operation as authentication information for performing identity authentication on the user; if the user can input correct authentication information, it indicates that the user has a right to undergo identity authentication by the wearable device, and if the user cannot input correct authentication information, it indicates that the user does not have a right to undergo identity authentication by the wearable device, that is, the user is not the preset user.

In addition, in Step S101, when the biological feature of the user is used for authenticating whether the user is the preset user, there may be a plurality of moments for determining whether the user is the preset user. The following introduces two of the determination moments, and certainly, a specific implementation process is not limited to the following two situations.

A first determination moment is every preset time interval, at which whether the user is the preset user is determined.

To be specific, that is, when detecting that the wearable device is wore by the user, the wearable device enables a biological authentication function, starts a biological feature collecting module of the wearable device to collect the biological feature, and then, performs the biological feature authentication on the user based on the biological feature; moreover, after performing the biological feature authentication on the user, performs the biological feature authentication on the user again at every preset time interval, such as 30min, 1.5h and 2h.

In the foregoing solution, because verification on whether the user is the preset user is performed at every preset time interval, if the wearable device is used by an unauthorized user, the preset user may learn it in a timely manner and then may take a corresponding measure in a timely manner to prevent a potential security hazard caused by a loss of the wearable device, thereby further improving security in using the wearable device.

A second determination moment is after it is determined that verification needs to be performed on the user by the electronic device. Whether the user is the preset user is determined at this moment.

In a specific implementation process, the determining that verification needs to be performed on the user by the electronic device may also be classified into a plurality of situations. The following introduces two of the situations, and certainly, the specific implementation process is not limited to the following two situations.

One situation may be that the identifier information of the electronic device is actively acquired by the wearable device when authentication needs to be performed on the user by the wearable device; after the identifier information is acquired, it is determined that authentication needs to be performed on the user by the electronic device.

In a specific implementation process, the wearable device may acquire the first identifier information by scanning a two-dimensional code of the electronic device, and may also send a request to the electronic device, and then, upon receiving the request, the electronic device sends the identifier information to the wearable device, and the like. The embodiments of the present application do not set a limitation on a specific manner adopted to acquire the identifier information.

Another situation may be that the electronic device actively sends its identifier information to the wearable device when detecting that the wearable device exists in an environment, and the wearable device does not need to send a request to the electronic device.

In the foregoing solution, because verification on whether the user is the preset user is performed only when identity authentication needs to be performed on the user by the electronic device, that is, verification on whether the user is the preset user does not need to be performed all the time, a technical effect of reducing the processing burden of the wearable device is achieved.

Further, in Step S102a, when it is determined that the user is the preset user, the wearable device is set with an access permission identifier that allows access to the verification information; and then the verification information may be acquired from the wearable device, thereby enabling the electronic device to perform authentication on the user based on the verification information.

Further, the Step S102a of determining verification information corresponding to an electronic device may include:
determine the verification information from a plurality of pieces of to-be-selected verification information, where the plurality of pieces of to-be-selected verification information is provided for a plurality of to-be-verified electronic devices for verification.

To be specific, that is, to-be-selected verification information is different for different electronic devices; therefore, verification information of different security levels may be set based on different application scenarios; accordingly, the identity authentication manner of the user is more flexible.

Further, in order to determine the verification information among the plurality of pieces of to-be-selected verification information, firstly, the wearable device needs to acquire the verification information, and the wearable device may acquire the verification information at a plurality of moments; the following illustrates two of the moments, and certainly, a specific implementation process is not limited to the following two situations.

In a first situation, the verification information is pre-stored in the wearable device during initialization and the verification information is determined according to a right of the user.

In a specific implementation process, the time of initialization refers to the time when the verification information is generated. For example, when a user checks in a hotel, user information is entered into a hotel management system, and corresponding verification information is allocated to the user; for another example, when a user rents a car, user information is entered into a car rental management system, and corresponding verification information is allocated to the user, and the like. After the verification information is generated, the wearable device directly acquires the verification information. Assuming that the verification information is verification information corresponding to the hotel at which the user checks in, the verification information may include a validity period, an authentication password, a room number and the like. Then the wearable device may directly acquire the verification information from an electronic device (such as the hotel management system) that performs authentication on the user; for example, the user may locally download the verification information by a mobile phone, and then transmit the verification information to the wearable device by means of Bluetooth, infrared, or the like; or, the electronic device directly transmits the verification information to the wearable device by means of a short message and the like. The embodiments of the present application do not set a limitation on a specific manner adopted to acquire the verification information.

In a second situation, the verification information is acquired from a network server and is stored in the wearable device, where the verification information is determined according to a right of the user.

In a specific implementation process, that the verification information is acquired from a network server may also be classified into a plurality of situations. The following introduces two of the situations, and certainly, a specific implementation process is not limited to the following two situations.

One situation may be that no verification information is stored in the wearable device at all, and verification information corresponding to the electronic device is acquired from a network server only when authentication needs to be performed on the user by the electronic device, and is then sent to the electronic device.

Another situation may be that the wearable device stores a part of verification information; when authentication needs to be performed on the user by the electronic device, the wearable device is first searched for the verification information; if the verification information is not found, the verification information is then acquired from a network server.

In the network server in a specific implementation process, each piece of verification information among the plurality of pieces of to-be-selected verification information has corresponding identifier information, a verification password and a validity period, as shown in Table 1:

**Table1**

| **Identifier information** | **Verification password** | **Validity period** |
|---|---|---|
| D1 | Signature RSA Private key 1 | forever |
| D2 | Password PWD1 | 1 day |
| ...... | ...... | ...... |

An electronic device with identifier information D1 performs authentication by adopting an RSA public key mechanism in a digital signature; a verification password corresponding to the user is a private key 1 with a validity period of forever, that is, a permanent validity period; and such verification information with a permanent validity period may generally be applied to an electronic device that requires conventional authentication, such as smart furniture equipment. An electronic device with identifier information D2 performs authentication by means of a password; and a verification password corresponding to the user is PWD1 with a validity period of 1 day, and may be applied to scenarios including electronic device rental, service purchasing, and the like.

Certainly, Table 1 gives examples for only a plurality of pieces of to-be-selected verification information; however, the plurality of pieces of to-be-selected verification information is not limited to the information illustrated in Table 1.

Further, for a further embodiment as an improvement, refer to FIG. 3; in Step S102, the verification information may be determined in the following manners:

Step S301: Acquire identifier information of the electronic device;

Step S302: Determine, according to a matching relationship between identifier information and to-be-selected verification information, the verification information corresponding to the identifier information of the electronic device.

Further, in Step S301, the identifier information of the electronic device may be acquired in a plurality of manners, for example: shooting a two-dimensional code of the electronic device, and determining the identifier information of the electronic device by using the two-dimensional code; for another example, sending request information to the electronic device, where the electronic device sends the identifier information of the electronic device to the wearable device based on the request information; for another example, actively sending identifier information of the electronic device to the wearable device by the electronic device, and the like. The embodiments of the present application do not set a limitation on a specific manner adopted to acquire the identifier information of the electronic device.

Further, in Step S302, because different electronic devices correspond to different identifier information and further correspond to different verification information, verification information corresponding to the user may be determined by using the identifier information of the electronic device. Further, it can be known from previous description that the wearable device may acquire the verification information in a plurality of moments; accordingly, an interaction process between the wearable device and the electronic device is also different. The following illustrates two of the interaction processes for description, and certainly, a specific implementation process is not limited to the following two situations.

In a first situation, in Step S102, the acquiring the verification information includes: establishing a communication connection with a network server, and obtaining the verification information from the network server.

In this situation, in Step S103, the sending the verification information to the electronic device specifically includes: forwarding the verification information obtained from the network server to the electronic device.

To be specific, that is, the verification information is not pre-stored in the wearable device, but is acquired from the network server when identity authentication needs to be performed on a user by the electronic device, and then the verification information is sent to the electronic device by the wearable device. After receiving the verification information, the electronic device performs authentication on the user by using the verification information.

In the foregoing solution, the verification information is pre-stored in the wearable device during initialization; therefore, the verification information may be acquired from the wearable device directly when verification is performed on the user by the electronic device, thereby achieving a technical effect of a relatively high verification speed.

In a second situation, in Step S102, the acquiring the verification information includes: obtaining the verification information from a storage of the wearable device.

In this situation, in Step S103 the sending, by the wearable device, the verification information to the electronic device specifically includes: sending the verification information obtained from the storage to the electronic device.

To be specific, that is, the verification information is pre-stored in the wearable device, where the verification information may be generated during initialization of the verification information or last time identity authentication is performed on the user by the electronic device. When the identity authentication needs to be performed on the user, the verification information is acquired directly from the storage and sent to the electronic device.

In the foregoing solution, the verification information is acquired from the network server, that is, the verification information does not need to be stored in the wearable device; therefore, a technical effect of reducing the storage space of the wearable device is achieved. Further, for a further embodiment as an improvement, after the verification information is determined based on Step S102a, referring to FIG. 4, the method further includes:

Step S401: Determine whether the wearable device includes expired verification information that has expired.

Step S402: Delete at least one piece of the expired verification information when the expired verification information is included.

It can be learnt from Table 1 that each piece of verification information in the wearable device includes a validity period, and, if a validity period expires, the verification information cannot be used to perform authentication on the user; therefore, in Step S401, whether time of each piece of verification information in the wearable device exceeds the time corresponding to the validity period can be determined, and, when time of a piece of verification information exceeds the time corresponding to the validity period, it indicates that the verification information is expired verification information, and then the expired verification information is obtained.

In Step S402, because the expired verification information cannot be used for identity authentication on the user, in order to save the storage space of the wearable device, at least one piece of the expired verification information needs to be deleted from the storage space of the wearable device.

In the foregoing solution, when the expired verification information that has expired exists in the wearable device, at least one piece of the expired verification information may be deleted; therefore, the storage space of the wearable device may be reduced.

Further, in Step S103, the verification information may be matched with the preset verification information that is corresponding to the preset user and is stored in the electronic device; if a match is found, it indicates that the user is the preset user, and the user is allowed to have a same right with the preset user; and if the matching fails, it indicates that the user is not the preset user, and the user is forbidden from enjoying the right owned by the preset user.

Further, in Step S102b, when the user is not the preset user, it indicates that the wearable device is acquired by an unauthorized user; therefore, the wearable device is set with an access forbiddance identifier forbidding an access to the at least two pieces of verification information, moreover, alarm information is generated so that a loss to the preset user is reduced.

In a specific implementation process, voice, text or image alarm information may be sent to a preset address, where examples of the preset address are a phone number, an e-mail, and the like of the preset user. In addition to information showing an unauthorized use of the wearable device, the alarm information may also include some other information to facilitate finding the wearable device by the preset user. The following introduces three kinds of the information, and certainly, a specific process is not limited to the following three situations.

In a first situation, the alarm information includes information including a feature of the user.

To be specific, an image of the user may be obtained by an image collecting apparatus carried by the wearable device, or voice of the user may be acquired by a recording device of the wearable device, and the like; and then, the preset user may determine the user identity based on the feature.

In a second situation, the alarm information is specifically information including a current location.

To be specific, a GPS navigator preinstalled in the wearable device may be used to determine the current location of the wearable device; and then, the preset user may determine a location of the wearable device based on the current location in a timely manner.

In a third situation, the alarm information is specifically information including the feature and the current location.

To be specific, that is, a feature of the user is obtained to enable the user identity to be identifiable, and the current location may also be obtained to help find the wearable device more conveniently.

Further, if the user is not the preset user, the verification information is refused to be sent to the electronic device. The verification information needs to be sent to the electronic device only when the wearable device authenticates that the user is the preset user, and then identity authentication is performed on the user, that is, if the user is not the preset user, identity authentication does not need to be performed on the user by the electronic device, thereby achieving a technical effect of reducing the processing burden of the electronic device.

The following introduces an authentication method of a wearable device according to the present invention by using several specific embodiments.

### Embodiment 1

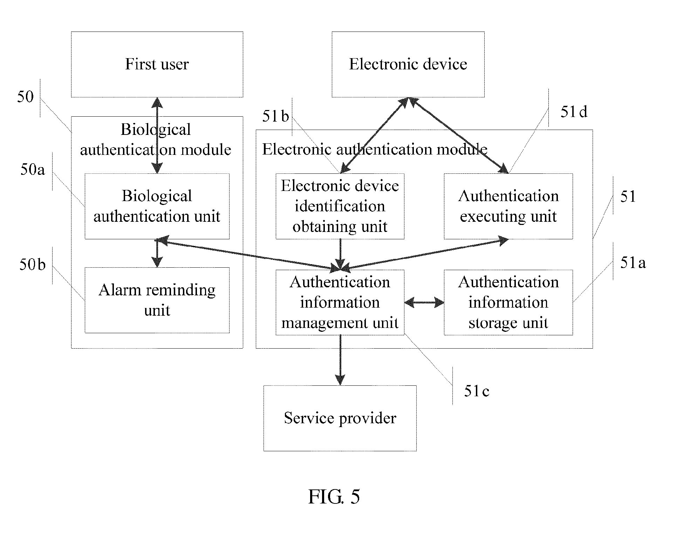

Embodiment 1 of the present application introduces a system block diagram of an authentication method based on a wearable device according to the present application. Referring to FIG. 5, the system block diagram specifically includes the following structures:
a biological authentication module 50, where the biological authentication module 50 includes a biological authentication unit 50a and an alarm reminding unit 50b; where:
   the biological authentication unit 50a is specifically configured to perform verification on whether a user is the preset user; and
   the alarm reminding unit 50a is configured to generate alarm information when a user is not a preset user, where, for a specific alarm information type of the alarm information, description is introduced above, and details are not further described herein; and
   an electronic authentication module 51, where the electronic authentication module 51 includes an authentication information storage unit 51a, an electronic device identifier acquiring unit 51b, an authentication information management unit 51c, and an authentication executing unit 51d; where:
   the authentication information storage unit 51a is configured to store a plurality of pieces of to-be-selected verification information corresponding to a plurality of to-be-verified electronic devices, where each piece of verification information among the plurality of pieces of to-be-selected verification information includes electronic device identifier information, an authentication manner, a relevant parameter, a validity period, and the like;
   the electronic device identifier acquiring unit 51b is configured to interact with one or more other electronic devices (such as an electronic device) in an environment in which the wearable device is located, and then obtain identifier information of the electronic device, and send the identifier information to the authentication information management unit 51c, where the identifier information may be acquired by means of broadcasting by the electronic device, or an active search in the electronic device by the identifier information acquiring unit 51b;
   the authentication information management unit 51c is configured to manage authentication on the electronic device, that is, mainly configured to manage a process of authenticating the user by other electronic devices in the environment, and mainly implement the following functions: (1) acquiring an access permission identifier or an access forbiddance identifier from the biological authentication module 50, and determining, by using the access permission identifier or the access forbiddance identifier, permission or forbiddance of an access to the plurality of pieces of to-be-selected verification information; (2) searching, when determining that an access to the plurality of pieces of to-be-selected verification information is allowed and according to the identifier information provided by the electronic device identifier acquiring unit 51b, the authentication information storage unit 51a for the verification information corresponding to the identifier information; (3) sending the verification information to the authentication executing unit 51d; and (4) periodically scanning the authentication information storage unit 51a to determine validity of the plurality of pieces of to-be-selected verification information stored in the authentication information storage unit 51a, and when at least one piece of expired verification information exists, deleting the at least one piece of expired verification information; and
   the authentication executing unit 51d is specifically configured to receive the verification information sent by the authentication information management unit 51c, and then send the verification information to the electronic device to perform identity authentication the user based on the electronic device.

### Embodiment 2

Embodiment 2 of the present invention introduces, by using an application scenario of hotel check-in during a trip, in detail an authentication method based on a wearable device introduced in the embodiment of the present application, where the wearable device is a ring, the user is a user A, and the verification information is stored in the ring.

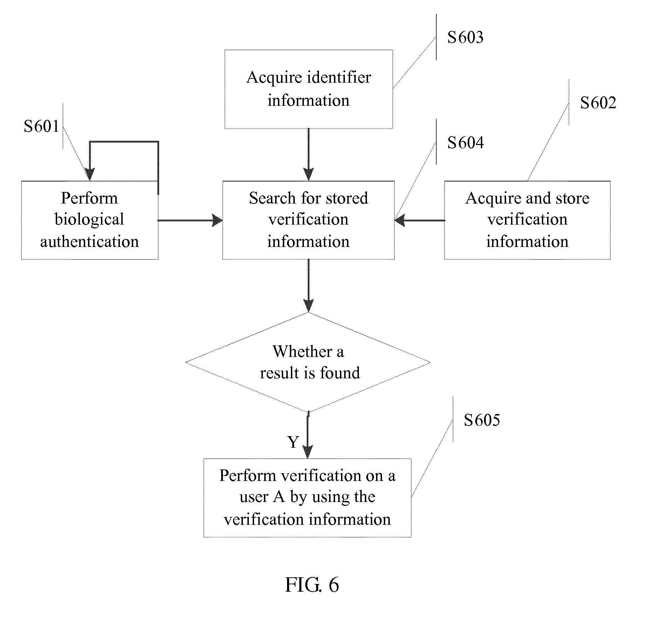

Refer to FIG. 6, which is a system flowchart of the authentication method based on a wearable device:
Step S601: Biological authentication is performed on the user A, where, after the user A puts on the ring, a biological authentication unit 50a of the ring periodically performs authentication on whether the user A is a preset user, and an access permission identifier or an access forbiddance identifier is set and sent to an authentication information management unit 51c;
Step S602: when the user A checks in a hotel to book a room for one day, a reception sends verification information of the room in which the user A is to stay to the ring by a reception server device, and a validity period of 1 day is marked; the authentication information management unit 51c of the ring writes the verification information and relevant parameter information into an authentication information storage unit 51a, where, for example, the verification information and the relevant parameter information are password type authentication with an authentication password of PWD1;
Step S603: the user A arrives at a door of the room, and the ring acquires identifier information of an electronic access control of the room and sends the identifier information to the authentication information management unit 51c;
Step S604: the authentication information management unit 51c determines, according to the access permission identifier or the access forbiddance identifier set in Step S601, whether the search for a plurality of pieces of to-be-selected verification information is allowed; if the identifier is the access permission identifier, the authentication information storage unit 51a is searched and then the previously stored verification information, that is, PWD1, is acquired; and
Step S605: the verification information is sent to an authentication executing unit 51d to enable the authentication executing unit 51d to send an authentication request to the electronic access control based on the verification information, thereby authenticating whether the user A could enter the room.

Further, when the user A hopes to prolong a stay duration or change a room, the reception server device sends updated verification information to the ring. For example, a validity period of the verification information is prolonged to 2 days, or new verification information is generated and sent to the ring. After receiving the new verification information, the authentication information management unit 51c of the ring stores the new verification information in the authentication information storage unit 51a of the ring.

Further, the authentication information management unit 51c of the ring periodically detects validity of the verification information stored in the authentication information storage unit 51a, and then clears expired verification information, thereby reducing the storage space of the wearable device. For example, after the user A checks out of the hotel, the verification information corresponding to the hotel may be cleared.

### Embodiment 3

In this embodiment, an authentication method based on a wearable device is introduced by applying the wearable device to a car rental service, where the wearable device is a ring, the user is a user B, and the verification information is stored in the ring.

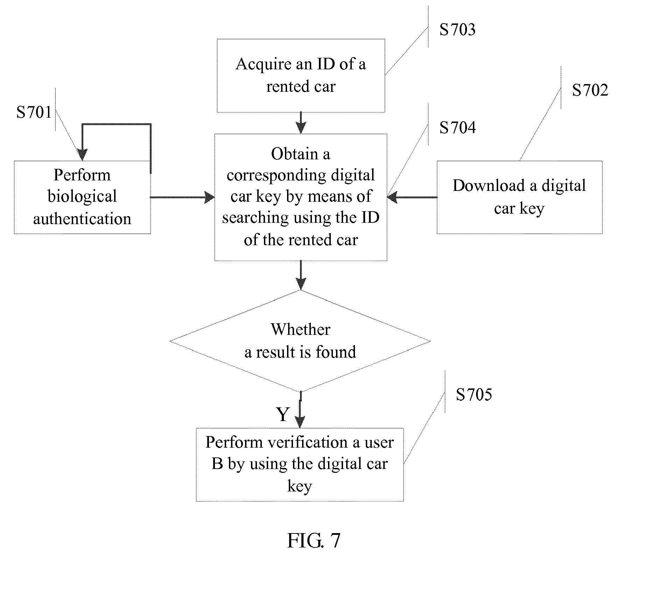

Referring to FIG. 7, the authentication method specifically includes the following steps:
Step S701: The ring performs biological authentication on the user B at a regular time;
Step S702: the user B submits a request for a car rental service over the Internet when making a travel plan and then downloads a digital car key (that is, verification information) to the ring;
Step S703: after arriving at a tour city, the user B directly finds a car corresponding to a corresponding car type in a parking lot to acquire an ID (that is, identifier information) of an electronic car lock of the rented car;
Step S704: after biological authentication is performed by the ring on the user B to determine that the user B has a right to undergo identity authentication by the wearable device, a corresponding digital car key is obtained by means of searching using the ID of the rented car; and
Step S705: the digital car key is sent to the electronic car lock of the corresponding rented car to perform authentication on whether the user B has a right to use the rented car.

### Embodiment 4

In this embodiment, an introduction is provided by using the same example that the method is applied to the car rental service. In this embodiment, the wearable device is a ring, the user is a user C, and the verification information is acquired when authentication needs to be performed on the user C by a rented car.

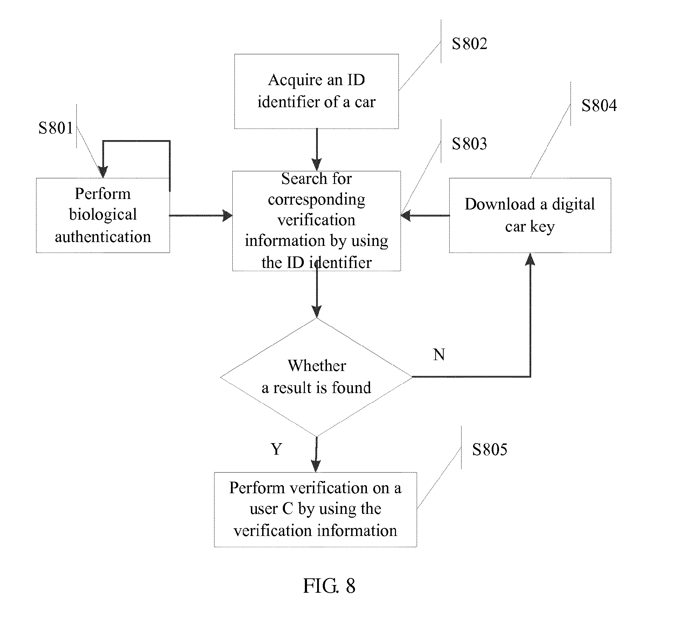

Referring to FIG. 8, the method specifically includes the following steps:
Step S801: After the user C puts on the ring, a biological feature recognition unit 50a of the ring performs identity authentication on the user C periodically, records an authentication result (whether the user C is a legitimate user), and then sets an access permission identifier or an access forbiddance identifier based on the authentication result, and sends the access permission identifier or the access forbiddance identifier to an authentication information management unit 51c;
S802: after arriving at a car rental service spot, the user selects on site the car that the user wants to rent; and after the selection, the ring obtains an ID (that is, identifier information) of an electronic car lock of the car;
S803: the identifier information is sent to the authentication information management unit 51c, where the authentication information management unit 51c determines, according to the access permission identifier or the access forbiddance identifier set in Step S801, whether a search for at least two pieces of verification information is allowed, and if the identifier is the access permission identifier, an authentication information storage unit 51a is searched;
S804: because the verification information does not exist in the authentication information storage unit 51a, the authentication information management unit 51c sends the ID identifier to a relevant device on the service spot to acquire verification information corresponding to the car and stores the verification information in the authentication information storage unit 51a for use in a subsequent search; and
S805: the authentication information management unit 51c sends the verification information to an authentication executing unit 51d to enable the authentication executing unit 51d to send the verification information to the electronic car lock corresponding to the rented car, and then perform authentication on the user by the electronic car lock, and if the authentication succeeds, the car door is unlocked.

Further, the authentication information management unit 51c periodically searches for validity of the to-be-selected verification information stored in the authentication information storage unit, and then clears expired verification information in order to reduce the storage space of the wearable device, where, for example, when the car rental time ends, the authentication information management unit 51c automatically clears the verification information corresponding to the rented car.

### Embodiment 5

In this embodiment, introduction is provided using an example that an authentication method based on a wearable device is applied to a scenario with a relatively high requirement on individual security identification of a user identity. For example, the authentication method is used as a method for implementing a real-name mechanism to replace an ID card; or replace a credit card entity to perform transaction, payment, and the like.

In this embodiment, the introduction is provided also by using an example that a ring is used as the wearable device, where the user is a user D, the electronic device is a POS machine, and biological authentication on the user D is triggered by the POS machine.

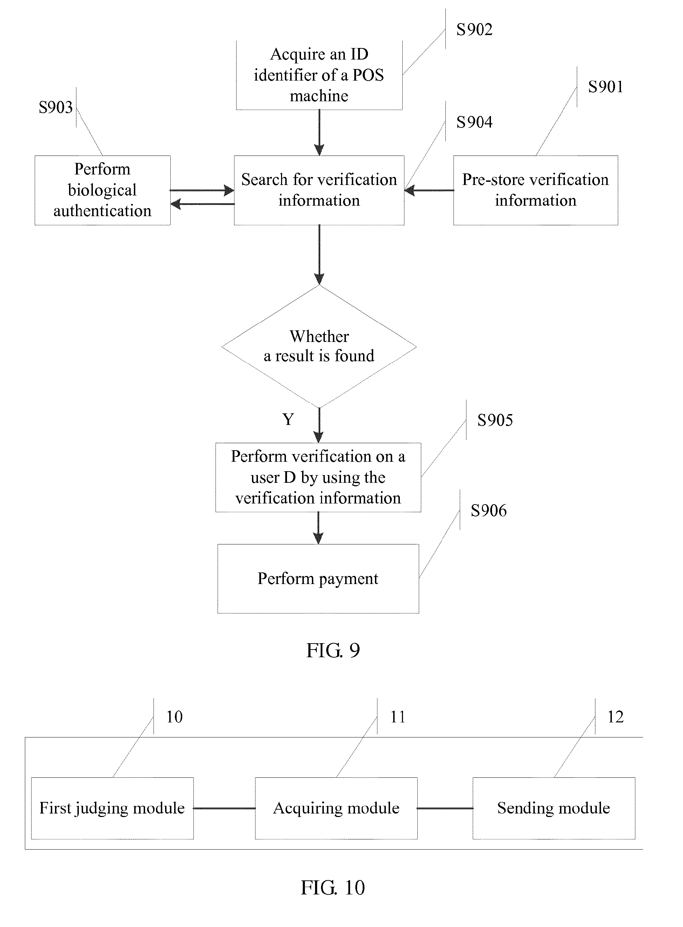

Referring to FIG. 9, the authentication method specifically includes the following steps:
Step S901: An authentication information storage unit 51a of the ring presets verification information of the POS machine in advance, for example, private key information Private_key1 of a digital signature;
Step S902: the ring acquires an ID identifier, that is, identifier information, of the POS machine;
Step S903: the identifier information is sent to an authentication information management unit 51c; after receiving the identifier information, the authentication information management unit 51c sends a message to a biological authentication module 50 to request for biological authentication on the user D; the biological authentication module 50 performs biological authentication on the user D, records an authentication result (whether the user is a legitimate user), and then writes an access permission identifier or an access forbiddance identifier based on the authentication result;
Step S904: based on the access permission identifier or the access forbiddance identifier, whether the user D has a right to access the verification information is determined; and if the identifier is the access permission identifier, the authentication information storage unit 51a is searched;
Step S905: an authentication parameter Private_key1 is acquired, and Private_key1 is sent to an electronic authentication module 51b and used for the current authentication on the user D by the POS machine; and
Step S906: after the user D is authenticated successfully by the POS machine, the POS machine continues communication with an electronic wallet software module on the ring to complete a subsequent payment operation.

In a second aspect, embodiments of the present invention provide an authentication apparatus based on a wearable device. Referring to FIG. 10, the apparatus specifically includes:
a first judging module 10, configured to determine whether a user is a preset user of a wearable device;
an acquiring module 11, configured to acquire verification information of a corresponding target electronic device if the user is the preset user, where the verification information is used for authenticating the user by the electronic device; and
a sending module 12, configured to send the verification information to the electronic device.

Optionally, the first judging module 10 specifically includes:
a first detecting unit, configured to acquire a biological feature of the user;
a judging unit, configured to determine whether the biological feature is a preset feature, where, when the biological feature is the preset feature, it indicates that the user is the preset user.

Optionally, the first judging module 10 is specifically configured to:
determine whether the user is the preset user at every preset time interval; or
determine whether the user is the preset user after determining that verification needs to be performed on the user by the electronic device.

Optionally, the device further includes:
a storing module, configured to store the verification information during initialization, where the verification information is determined according to a right of the user; or
to acquire the verification information from a network server, and store the verification information in the wearable device, where the verification information is determined according to a right of the user.

A network server is optional, and the acquiring module 11 is specifically configured to:
establish a communication connection with the network server, and obtain the verification information from the network server; and
the sending module is specifically configured to forward the verification information obtained from the network server to the electronic device.

Optionally, the acquiring module 11 specifically includes:
an acquiring unit, configured to acquire identifier information of the electronic device; and
a determining unit, configured to determine, according to a matching relationship between identifier information and verification information, verification information corresponding to the first identifier information.

Optionally, the device further includes:
a second judging module, configured to determine whether the wearable device includes expired verification information that has expired; and
a deleting module, configured to delete at least one piece of the expired verification information when the expired verification information is included.

Optionally, the device further includes:
an alarming module, configured to generate alarm information after the first judging module 10 determines that the user is not the preset user, where the alarm information includes at least information including a feature of the user or information including a current location of the user.

Further, the first judging module 10 determines that the user is not the preset user of the wearable device, and then the sending module 11 refuses to send the verification information to the electronic device.

The foregoing wearable device is the device adopted to implement the authentication method of a wearable device introduced in the embodiments of the present invention; therefore, based on the authentication method of a wearable device introduced by the embodiments of the present invention, a person skilled in the art may understand a specific structure and transformation of the wearable device introduced in the embodiments of the present invention, and details are not further described herein.

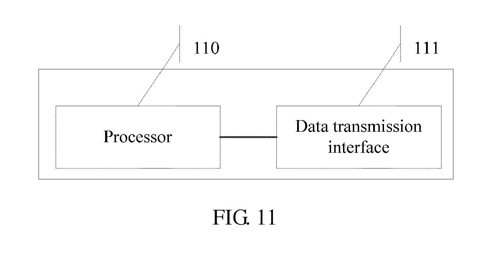

In a third aspect, embodiments of the present invention provide a wearable device. Referring to FIG. 11, the wearable device specifically includes:
a processor 110, configured to determine whether a user is a preset user of the wearable device; and
if the user is the preset user, acquire verification information of a corresponding target electronic device, where the verification information is used for authenticating the user by the electronic device; and
a data transmission interface 111, connected to the processor 110 and configured to send the verification information to the electronic device.

Optionally, the device further includes:
a storage, configured to store a preset feature;
a biological feature collecting module, configured to collect a biological feature of the user;
the processor 110, further configured to determine whether the biological feature is the preset feature, where, when the biological feature is the preset feature, it indicates that the user is the preset user.

Optionally, the wearable device further includes:
a timer, configured to generate a trigger signal at every preset time interval; and
the processor 110, specifically configured to receive the trigger signal and determine, based on the trigger signal, whether the user is the preset user; or
the processor 110, specifically configured to determine whether the user is the preset user after determining that verification needs to be performed on the user by the electronic device.

Optionally, the data transmission interface 111 is further configured to:
pre-store the verification information in the storage during initialization, where the verification information is determined according to a right of the user; or
acquire the verification information from a network server, and store the verification information in the storage, where the verification information is determined according to a right of the user.

Optionally, the data transmission interface 111 is specifically configured to:
establish a communication connection with a network server, and obtain the verification information from the network server; and
forward the verification information obtained from the network server to the electronic device.

Optionally, the processor 110 is specifically configured to:
acquire identifier information of the electronic device, and
determine, according to a matching relationship between identifier information and verification information, verification information corresponding to the first identifier information.

Optionally, the processor 110 is further configured to:
determine whether the wearable device includes expired verification information that has expired; and
when the expired verification information is included, delete at least one piece of the expired verification information.

Optionally, the processor 110 is further configured to generate alarm information if the user is not the preset user, where the alarm information includes at least information including a feature of the user or information including a current location of the user.

The foregoing wearable device is the device adopted to implement the authentication method of a wearable device introduced in the embodiments of the present invention; therefore, based on the authentication method of a wearable device introduced by the embodiments of the present invention, a person skilled in the art may understand a specific structure and transformation of the wearable device introduced in the embodiments of the present invention, and details are not further described herein.

One or more technical solutions provided by the present application has at least the following technical effects or advantages:
(1) In the embodiments of the present invention, when authentication is performed on a user by a wearable device, firstly, whether a user wearing the wearable device is a preset user is determined; when the user is the preset user, it is determined that the user has a right to undergo identity authentication by the wearable device; after thatm, verification information is determined by the wearable device and the verification information is sent to an electronic device, so that the electronic device performs authentication on the user by using the verification information; because the identity authentication on the user is performed only on the wearable device, and the verification information sent to the electronic device is verification information corresponding to the electronic device, that is, when identity authentication is performed on the user, the unique identifier information of the user does not need to be sent to the electronic device; therefore, privacy of the user is guaranteed, information leakage is prevented, and a technical effect of a higher security is achieved; and
   further, the verification information needs to be sent to the electronic device only when the wearable device authenticates that the user is the preset user, and then identity authentication is performed on the user, that is, if the user is not the preset user, the identity authentication on the user does not need to be performed by the electronic device; therefore, a technical effect of reducing the processing burden of the electronic device is achieved.
(2) In the embodiments of the present application, when whether the user is the preset user is determined, a biological feature of the user is collected by the wearable device and a matching is performed between the biological feature with a preset feature; because the biological feature is an inherent biological feature of the user, different users do not share a same biological feature; therefore, a technical effect of guaranteeing accuracy in the identity verification of the user is achieved; and further, the biological feature may be captured directly by the wearable device without a need of responding to other operations of the user; therefore, a technical effect that it is more convenient to perform the identity authentication for the user is achieved.
(3) In the embodiments of the present application, because verification on whether the user is a preset user may be performed at every preset time, in a situation in which the wearable device is used by an unauthorized user, the preset user may learn it in a timely manner and then may take a corresponding measure in a timely manner to prevent a potential security hazard caused by a loss of the wearable device, thereby further improving security in using the wearable device; and
   further, verification on whether the user is the preset user may be performed only when identity authentication needs to be performed on the user by the electronic device, and verification on whether the user is the preset user does not need to be performed all the time; therefore, a technical effect of reducing the processing burden of the wearable device is achieved.
(4) In the embodiments of the present application, the verification information is verification information determined among the plurality of pieces of to-be-selected verification information, that is, verification information is different for different electronic devices; furthermore, verification information of different security levels may be set based on different application scenarios; therefore, a manner of the identity authentication on the user is more flexible.
(5) In the embodiments of the present application, because the verification information may be pre-stored in the wearable device during initialization, when verification on the user is performed by the electronic device, the verification information may be acquired directly from the wearable device, thereby achieving a technical effect of a higher verification speed;
   further, the verification information may also be acquired directly from a network server; then, the verification information acquired from the network server is sent to the electronic device, that is, the verification does not need to be stored in the wearable device; therefore, a technical effect of reducing the storage space of the wearable device is achieved.
(6) In the embodiments of the present application, when expired verification information that has expired exists in the wearable device, at least one piece of the expired verification information may be deleted; therefore, the storage space of the wearable device may be reduced.
(7) In the embodiments of the present application, when the user is not the preset user, a piece of alarm information is generated; therefore, a potential security hazard caused by a use of the wearable device by an unauthorized user can be prevented, thereby improving the security in the identity authentication on the user based on the wearable device; and
   further, the alarm information may further include one or more kinds of information of a feature and a current location of the user, thereby enabling the preset user to find the wearable device in a timely manner to prevent an information loss to the preset user and further guaranteeing information security.

A person skilled in the art should understand that, the embodiments of the present invention can provide a method, an apparatus (device), or a computer program product. Therefore, the present invention may be in a form of hardware embodiments, software embodiments, or a combination thereof. Furthermore, the present invention may be in a form of a computer program product implemented on a computer storage medium (which includes but is not limited to a magnetic disk storage, a CD-ROM, and an optical storage) that includes computer program code.

The present invention is described with reference to a flowchart and/or a block diagram of a method, an apparatus (device), or a computer program product according to an embodiment of the present invention. It should be understood that each flow and/or block in the flowchart and/or the block diagram, and a combination thereof may be implemented by a computer program instruction. These computer program instructions may be provided to a general computer, a special-purpose computer, an embedded processor or processors of other programmable data processing devices to produce a machine, so that an apparatus with a function specified in one flow or more flows in the flowchart and/or in one block or more blocks of the block diagram is produced by using an instruction executed by the computer or the processors of other programmable data processing devices.

These computer program instructions may be also stored in a computer readable storage capable of instructing the computer or other programmable data processing devices to work in a specific manner, thereby enabling the instruction stored in the computer readable storage to generate a manufacture including an instruction apparatus, where the instruction apparatus implements a function specified in one flow or more flows in the flowchart and/or in one block or more blocks in the block diagram.

These computer program instructions may also be loaded to the computer or other programmable data processing devices to execute a series of operation steps in the computer or other programmable devices to generate processing implemented by the computer, so that a step for implementing a function specified in one flow or more flows in the flowchart and/or in one block or more blocks in the block diagram is provided by using the instruction executed on the computer or other programmable devices.

Exemplary embodiments of the present invention are described; however, a person skilled in the art may still make various changes and modifications on the embodiments as long as basic innovative concepts are learnt. Therefore, the claims should be construed to include exemplary embodiments and all changes and modifications falling within the scope of the present invention.

Apparently, a person skilled in the art can make various modifications and variations to the present invention without departing from the spirit and scope of the present invention. The present invention shall be construed to include these modifications and variations, provided that these modifications and variations fall within the scope of the claims and equivalent technology of the present invention.

## Claims

1. An authentication method of a wearable device, comprising:
determining whether a user is a preset user of a wearable device;
if the user is the preset user, acquiring verification information of a target electronic device, wherein the verification information is used for authenticating the user by the electronic device; and
sending the verification information to the electronic device.

2. The method according to claim 1, wherein the determining whether a user is a preset user of a wearable device comprises:
acquiring a biological feature of the user; and
determining whether the biological feature is a preset feature, wherein, if the biological feature is the preset feature, it indicates that the user is the preset user.

3. The method according to claim 1, wherein the determining whether a user is a preset user comprises:
determining, at every preset time interval, whether the user is the preset user; or
after determining that verification needs to be performed on the user by the electronic device, determining whether the user is the preset user.

4. The method according to any one of claims 1-3, wherein the method further comprises:
pre-storing the verification information in the wearable device during initialization, wherein the verification information is determined according to a right of the user; or
acquiring the verification information from a network server, and storing the verification information in the wearable device, wherein the verification information is determined according to a right of the user.

5. The method according to any one of claims 1-4, wherein the acquiring verification information of a target electronic device comprises:
establishing a communication connection with a network server, and obtaining the verification information from the network server; and the sending the verification information to the electronic device comprises:
sending the verification information obtained from the network server to the electronic device.

6. The method according to any one of claims 1-4, wherein the acquiring verification information of a target electronic device comprises:
acquiring identifier information of the electronic device; and
determining, according to a matching relationship between identifier information and to-be-selected verification information, the verification information corresponding to the identifier information of the electronic device.

7. The method according to any one of claims 1-6, wherein the method further comprises:
determining whether the wearable device comprises expired verification information; and
if the expired verification information is comprised, deleting at least one piece of the expired verification information.

8. The method according to any one of claims 1-7, wherein the method further comprises:
if the user is not the preset user, generating alarm information, wherein the alarm information comprises at least information comprising a feature of the user or information comprising a current location of the user.

9. The method according to any one of claims 1-8, wherein the method further comprises:
if the user is not the preset user, refusing to send the verification information to the electronic device.

10. A wearable device, comprising:
a first judging module, configured to determine whether a user is a preset user of the wearable device;
an acquiring module, configured to acquire verification information of a corresponding target electronic device if the user is the preset user, wherein the verification information is used for authenticating the user by the electronic device; and
a sending module, configured to send the verification information to the electronic device.

11. The device according to claim 10, wherein the first judging module specifically comprises:
a detecting unit, configured to acquire a biological feature of the user; and
a judging unit, configured to determine whether the biological feature is a preset feature, wherein, when the biological feature is the preset feature, it indicates that the user is the preset user.

12. The device according to claim 10, wherein the first judging module is specifically configured to:
determine, at every preset time interval, whether the user is the preset user; or
after determining that verification needs to be performed on the user by the electronic device, determine whether the user is the preset user.

13. The device according to any one of claims 10-12, wherein the device further comprises:
a storing module, configured to store the verification information during initialization, wherein the verification information is determined according to a right of the user; or
acquire the verification information from a network server, and store the verification information in the wearable device, wherein the verification information is determined according to a right of the user.

14. The device according to any one of claims 10-13, wherein the acquiring module is specifically configured to:
establish a communication connection with a network server, and obtain the verification information from the network server; and
the sending module is specifically configured to forward the verification information obtained from the network server to the electronic device.

15. The device according to any one of claims 10-13, wherein the acquiring module comprises:
an acquiring unit, configured to acquire identifier information of the electronic device; and
a determining unit, configured to determine, according to a matching relationship between identifier information and verification information, the verification information corresponding to the identifier information of the electronic device.

16. The device according to claim 10, wherein the device further comprises:
a second judging module, configured to determine whether the wearable device comprises expired verification information that has expired; and
a deleting module, configured to delete at least one piece of the expired verification information when the expired verification information is comprised.

17. The device according to any one of claims 10-16, wherein the device further comprises:
an alarming module, configured to generate alarm information after the first judging module determines that the user is not the preset user, wherein the alarm information comprises at least information comprising a feature of the user or information comprising a current location of the user.

18. The device according to any one of claims 10-17, wherein:
the first judging module determines that the user is not the preset user of the wearable device, and
the sending module refuses to send the verification information to the electronic device.

19. A wearable device, comprising:
a processor, configured to determine whether a user is a preset user of the wearable device; and if the user is the preset user, acquire verification information of a target electronic device, wherein the verification information is used for authenticating the user by the electronic device; and
a data transmission interface, connected to the processor and configured to send the verification information to the electronic device.

20. The device according to claim 19, wherein the device further comprises:
a storage, configured to store a preset feature;
a biological feature collecting module, configured to collect a biological feature of the user; and
the processor, further configured to determine whether the biological feature is the preset feature, wherein, when the biological feature is the preset feature, it indicates that the user is the preset user.

21. The device according to claim 19, wherein the wearable device further comprises:
a timer, configured to generate a trigger signal at every preset time interval; and
the processor, specifically configured to receive the trigger signal and determine, based on the trigger signal, whether the user is the preset user; or
the processor, specifically configured to determine whether the user is the preset user after determining that verification needs to be performed on the user by the electronic device.

22. The device according to any one of claims 19-21, wherein the data transmission interface is further configured to:
pre-store the verification information in the storage during initialization, wherein the verification information is determined according to a right of the user; or
acquire the verification information from a network server, and store the verification information in the storage, wherein the verification information is determined according to a right of the user.

23. The device according to any one of claims 19-22, wherein the data transmission interface is specifically configured to:
establish a communication connection with a network server, and obtain the verification information from the network server; and
forward the verification information obtained from the network server to the electronic device.

24. The device according to claim 19, wherein the processor is specifically configured to:
acquire identifier information of the electronic device, and
determine, according to a matching relationship between identifier information and verification information, the verification information corresponding to the identifier information of the electronic device.

25. The device according to claim 19, wherein the processor is further configured to:
determine whether the wearable device comprises expired verification information that has expired; and
when the expired verification information is comprised, delete at least one piece of the expired verification information.

26. The device according to any one of claims 19-25, wherein the processor is further configured to generate alarm information if the user is not the preset user, wherein the alarm information comprises at least information comprising a feature of the user or information comprising a current location of the user.
